# EUROPEAN PATENT APPLICATION

(11) **EP 4 084 318 A1**
(43) Date of publication of application: **02.11.2022**
(21) Application number: 21382383.4
(22) Date of filing: 30.04.2021
(51) Int. Cl.: H02P 9/00

(54) **A WIND POWER FACILITY AND METHOD**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

A DFIG wind power facility configured to operate during grid faults is provided. The DFIG wind power facility comprises a Doubly-Fed Induction Generator (DFIG), a control system configured to manage the operation of the DFIG wind power facility, an electric converter, a stator-grid switch for selectively coupling/decoupling the stator and the grid and a short-circuit controlled switch configured to selectively short-circuit the stator thereby allowing the current to flow through the stator upon decoupling the grid from the stator. The Doubly-Fed Induction Generator comprises a rotor and a stator, wherein the stator comprises at least one three-phase winding. The electric converter comprises a Machine Side Converter (MSC), a Grid Side Converter (GSC) and a DC link connected therebetween. The stator-grid switch comprises an end connected to the stator and the other end connected to the grid. The short-circuit controlled switch further comprises at least an impedance and at least one controllable switch. A method for operating a DFIG wind power facility during grid faults is also provided.

## Description

### FIELD OF THE INVENTION

The present invention relates to wind power facilities and methods for operating, more specifically to DFIG wind power facilities and methods for operating during grid faults.

### BACKGROUND

Grid faults such as Low Voltage Ride Though (LVRT), voltage dip, voltage drop, grid loss, etc. may seriously affect the operation of a wind power facility. Upon detection of a grid fault, the operation of the wind power facility may usually need to be suddenly changed which requires sudden and fast operation change.

The wind power facility needs to quickly adapt to a new operating mode to face unexpected events such as grid faults, but furthermore, need to be configured to promptly return back to normal operation mode upon ceasing of the event.

Known methods in DFIG wind power facilities focus on reducing the energy production slowing down the rotor by braking and/or using the pitch control to modify the blade angle to reduce the wind impact surface. Thus, all the kinetic energy is dissipated through mechanical components thereby introducing high mechanical loads and stresses into the wind power facility. Consequently, the lifetime of the facility is reduced and/or the risk of failure increases.

In conclusion, there is a need to provide a DFIG wind power facility with optimized performance during grid faults which increases the efficiency in a cost-effective way while at the same time enables a safe operation.

### SUMMARY OF THE INVENTION

In a first aspect, a DFIG wind power facility configured to operate during grid faults is provided. The DFIG wind power facility comprises a Doubly-Fed Induction Generator (DFIG), a control system configured to manage the operation of the DFIG wind power facility, an electric converter, a stator-grid switch for selectively coupling/decoupling the stator and the grid; and a short-circuit controlled switch configured to selectively short-circuit the stator thereby allowing the current to flow through the stator upon decoupling the grid from the stator. The Doubly-Fed Induction Generator comprises a rotor and a stator, wherein the stator comprises at least one three-phase winding. The electric converter comprises a Machine Side Converter (MSC), a Grid Side Converter (GSC) and a DC link connected therebetween. The stator-grid switch comprises an end connected to the stator and the other end connected to the grid. The short-circuit controlled switch further comprises at least an impedance and at least one controllable switch.

The use of a short-circuit controlled switch enables short-circuiting the stator thereby enabling a continuous flow of the electrical energy from the stator during a grid fault. Moreover, the wind power facility may not need to be suddenly slowed down i.e. may continue almost under normal operation, which facilitates the return to normal operation after ceasing of the grid fault.

In addition, when short-circuiting the stator, the DFIG wind power facility may mimic the operation of a Full Converter (FC) e.g. during grid faults. FC wind power facilities are known to be more mechanic friendly i.e. avoid and/or prevent excessive mechanical loads during grid fault and also have enhanced ability to recover the normal operation after a grid event, i.e. grid fault, occurs. Therefore, when the grid fault ceases, the nominal energy production may be faster reached, and the wind turbine facility may recover the normal DFIG operation mode in a cost-effective way.

By providing a DFIG wind turbine that may under certain circumstances, i.e. during grid faults, be configured to behave as a FC, the efficiency of the wind power facility may be increased as it may not be necessary to drastically modify the normal functioning of the wind power facility. Moreover, a DFIG wind power facility has a lower manufacturing costs than a FC wind facility, and therefore, by configuring the DFIG wind turbine facility to operate during grid faults, some advantages of FC may be obtained but avoiding high manufacturing costs of a FC facility.

Furthermore, as mechanical stresses may be prevented, the lifetime of the wind power facility may be increased. In addition, the short-circuit controlled switch may easily be installed e.g. in already operating turbines.

The use of a short-circuit controlled switch allows operating the DFIG as motor which enables rotating the blades in absence of wind which may be useful e.g. for maintenance tasks and may also to facilitate the erection of the wind power facility e.g. for placing the blades in place. When closing the short-circuit controlled switch energy may be taken from the grid through the GSC.

Additionally, by using a short-circuit controlled switch comprising a at least an impedance at least a portion of the energy generated by the DFIG generator may be dissipated. Thus, during a grid fault when the stator is short-circuited, the generator may continue generating energy i.e. there may not need to abruptly stop the speed of the rotor. As no huge mechanical stresses or loads are required, smoother transitions and/or shut down may be achieved. In addition, as the loads on the stator may be further reduced the lifetime of the wind power facility may be extended.

In an example, the at least one controllable switch may be an electromechanical switch or an electronic switch. An electronic switch may provide a quicker switching, e.g. in microseconds, if compared with electromechanical switches. Alternatively, the electromechanical switches are more efficient and cheaper than electronic ones.

In an example, the short-circuit controlled switch may comprise a plurality of controllable switches. By having a plurality of switches the manufacturing costs may be reduced as commercially available or standard components may be used. In an example, the short-circuit controlled switch may comprise a plurality of impedances. Higher power capacities may be obtained without further manufacturing cost increase as standard components may be used.

In an example, the number of short-circuit controlled switch(es) may be proportional to the number of phases. In an example, the DFIG wind power facility may further comprise an Energy Storage System (ESS) in the DC link which enables storing the energy produced during grid faults. Thus, upon restoring the grid connection, the energy may be injected into the grid preventing the loss of the generated power. Additionally, the variability of the power injected to the grid may be substantially reduced as the power injected may not depend on the wind transients. In addition, the power injected to the grid may be limited to a preestablished maximum value e.g. during transient events. The preestablished value may depend on the grid requirements and the capability of the wind turbine.

Moreover, the use of an ESS enables reducing the mechanical loads in case of variable winds as it enables operating under constant torque in the generator and constant power in the grid. The lifetime of the wind power facility may thus be improved.

Besides, the ESS may provide an additional electromagnetic torque that can balance the input mechanical torque e.g. during grid transients, such electromagnetic torque being generated absorbing the energy harnessed from the wind and storing it in the ESS.

The use of ESS allows operating the DFIG as motor in case of grid loss as the stored energy may be used to move the rotor. The maintenance operations may be carried out in case of grid loss.

In an example, the ESS may comprise a plurality of batteries in series and/or in parallel. The value of the charge capability and voltage of the ESS may therefore be optimized. In an example, the ESS may be connected in parallel to the DC link capacitor which prevents losing control over the wind power facility as at sub-synchronous speed, the power flowing into the rotor is provided by the ESS; and at super-synchronous speed, the ESS may absorb the generated power before it reaches the Grid Side Converter thereby supporting the control of the wind power facility and avoiding losing such generated energy that can be injected into the grid after the event.

In a further aspect, a method for operating a DFIG wind power facility according to any of the disclosed examples, during grid faults is provided. The DFIG wind power facility further comprises a plurality of blades. Firstly, the grid connection is monitored. The short-circuit controlled switch is closed and the stator-grid switch is open in the event a grid loss in detected. The pitch of the plurality of blades of wind power facility is increased for gradually reducing the rotational speed of the rotor. The rotational speed of the rotor in then measured and a predetermined DC or AC current is injected in the rotor for adapting the rotor frequency. Then, upon measuring a rotational speed of the rotor below a predetermined shut down speed, the short-circuit controlled switch is opened thereby allowing a controlled, i.e. safe, shutting down the wind power facility.

By implementing such a method, the safety may be increased as the wind power facility may be securely operated during a grid fault. Indeed, a safe shutdown may prevent mechanical overloads and stress that may cause significant impact on the lifetime of a wind power facility.

In addition, in case of grid loss, the stator frequency may be changed in function of the generator speed to operate during the whole shutdown process in super-synchronous speed.

### BRIEF DESCRIPTION OF THE FIGURES

The forgoing and other features and advantages of the invention will become further apparent from the following detailed description read in conjunction with the accompanying drawings. In the drawings, like reference numerals refer to like elements.
Figures 1 schematically illustrates a DFIG wind power facility according to an example;
Figure 2A - 2E schematically illustrate a short-circuit controlled switch according to different examples;
Figure 3 schematically illustrates a flow diagram of a method for operating a DFIG wind power facility during grid loss according to an example;
Figure 4 schematically illustrates a flow diagram of a method for operating a DFIG wind power facility during low wind speed condition according to an example;
Figure 5 schematically illustrates a flow diagram of a method for operating a DFIG wind power facility to operate the electrical power drive as motor according to an example;
Figures 6 schematically illustrates a DFIG wind power facility according to an example; and
Figure 7 schematically illustrates a flow diagram of a method for operating a DFIG wind power facility to operate the electrical power drive as motor during grid loss according to an example.

### DESCRIPTION

The term "wind power facility" shall be understood as a wind turbine or as a plurality of wind turbines.

The term "connected/coupled to the grid" shall be understood as either a direct connection of a wind power facility and the electrical grid, or, in case of a wind power facility located at a wind farm an indirect connection.

The terms "connected" and "coupled" shall be considered synonyms and are interchangeably used herein. Similarly, the terms "disconnected" and "uncoupled" shall be considered synonyms and are interchangeably used herein.

The term "Grid Side Converter (GSC)" shall be understood as the part of an electric converter facing or coupled to an electrical grid. Such connection may be direct or have an intermediate device e.g. a common coupling point of several wind power facilities of a wind farm which centralizes the contributions of a plurality of facilities.

The term "normal operation" shall be understood as the usual running of a wind power facility in absence of unexpected events, such grid faults.

The term "grid fault" shall be understood as a plurality of electric phenomena e.g. voltage dip, grid loss, etc., that may affect the normal functioning of a wind power facility.

The term "Low Voltage Ride Though (LVRT)" shall be understood as the generator capability to stay connected during a short period of low electric network voltage.
The term "voltage dip or voltage drop" shall be understood as a short duration abrupt reduction of grid voltage.

The term "grid loss" shall be understood as a sudden decoupling of the wind power facility from the grid.

The term "circuit branch" shall be understood as an electrical path between two circuit nodes wherein each branch may comprise a single element or a plurality of elements arranged in series.

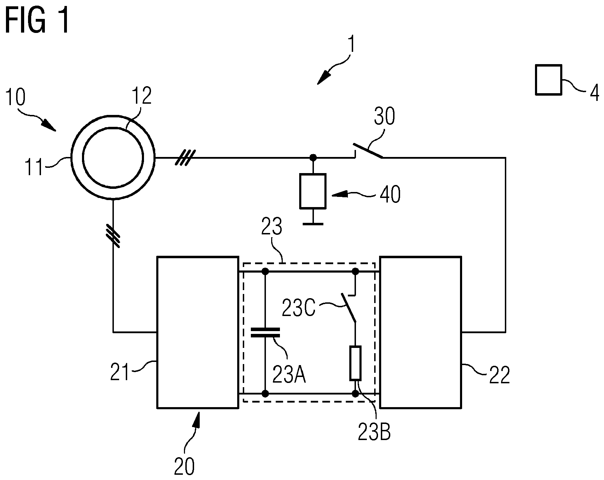

Figure 1 depicts a wind power facility 1, e.g. a wind turbine, according to an example. The wind power facility 1 may be configured to operate during grid faults such as grid loss.

The wind power facility 1 may comprise a Doubly-Fed Induction Generator (DFIG) 10 that may comprise a stator 11 and a rotor 12. The stator 11 may comprise at least one three-phase winding (not shown). In other examples, the stator 11 may comprise two or more three-phase winding. The wind power facility 1 may also comprise a plurality of blades (not shown) connected to the rotor via a hub in order to mechanically transmit the received wind power to be transformed it into electric power.

The wind power facility 1 may further comprise a converter 20 which may comprise a Machine Side Converter (MSC) 21, a Grid Side Converter (GSC) 22 and a DC link 23 coupled therebetween. The DC link 23 may comprise a switch 23C in series with a resistor 23B. The switch 23C and the resistor 23B may be arranged in parallel to a capacitor 23A.

In an example, the capacitor 23A may be e.g. an electrolytic capacitor, having a capacitance order around e.g. dozens of mF. In an example, the resistor 23B may have a resistance of e.g. around mQ, with a capacity of dissipating e.g. dozens of MJ.

The wind power facility 1 may further comprise a stator-grid switch 30 for selectively coupling/decoupling the stator and the grid. The stator-grid switch 30 may comprise an end coupled to the stator and the other end coupled to the grid.

The wind power facility may further comprise a control system 4 which may be configured to manage and control the operation of the wind power facility. The control system may send control signals e.g. wired or wirelessly, to the components of the wind turbine facility e.g. the converter. The control system may be configured to implement or carry out any method described herein.

In addition, the wind power facility 1 may comprise a short-circuit controlled switch 40. The short-circuit controlled switch 40 may comprise an end coupled to the stator and another end coupled to ground. The short-circuit controlled switch 40 may be configured to selectively short-circuit the stator. Therefore, in case the stator is disconnected from the grid, e.g. due to a grid fault, the current may flow through the stator. In the event of a grid fault, the wind power facility may thus be slowed down with power dissipation thereby ensuring a safe and/or controlled shut down while also reducing mechanical loads.

The short-circuit controlled switch 40 and the stator-grid switch 30 may be configured to be opened alternately, i.e. not simultaneously. That is, during normal operation the stator-grid switch 30 may be configured to be closed, and thus, the stator current can flow into the grid. The short-circuit controlled switch 40 may, during normal operation, be configured to be open.

The number of short-circuit controlled switch(es) 40 may depend on the number of phases. That is, in examples with one phase a single short-circuit controlled switch 40 may be used. In examples having three phases, three short-circuit controlled switches may be used.

In the event of a grid fault, i.e. upon detection of a grid event, the stator-grid switch 30 may be configured to be opened and the short-circuit controlled switch 40 may be configured to be closed.

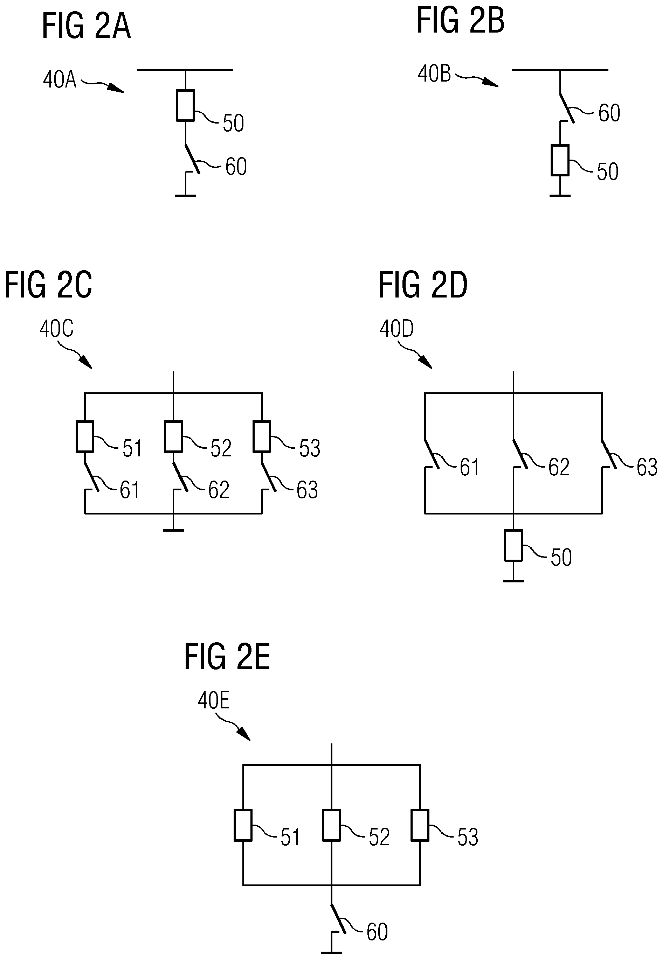

The short-circuit controlled switch 40 may comprise at least one controllable switch 60 configured to open/close the electric connection between the stator and the ground connection (see Figures 2A - 2C). The at least one controllable switch 60 may be an electromechanical switch, e.g. a contactor; or an electronic switch e.g. a thyristor, an Insulated Gate Bipolar Transistor (IGBT) or any other suitable device.

In some examples (see Figures 2C and 2D), the short-circuit controlled switch 40 may comprise a plurality of controllable switches 61 - 63. In such examples, the plurality of controllable switches 61 - 63 may be arranged in parallel. The plurality of controllable switches 61 - 63 may be electromechanical switches, electronic switches or a combination thereof. The short-circuit controlled switch 40 may further comprise at least one impedance 50 - 53 (see Figures 2A - 2D). The at least one impedance 50 - 53 may be a e.g. a resistor.

In some examples (see Figures 2A, 2B and 2D), the short-circuit controlled switch 40A, 40B, 40C may comprise a single impedance. The impedance 50 may be arranged in series with a controllable switch 60 - 63 (see Figures 2A and 2B) or in series with all controllable switches 60 - 63 (see Figure 2D). In alternative examples (see Figures 2C and 2E), the short-circuit controlled switch 40C may comprise a plurality of impedances. Each or all impedances may be arranged in series with a controllable switch 60 - 63.

Different configurations may be possible wherein the short-circuit controlled switch 40A - 40D comprises at least a controllable switch 60 - 63 and at least an impedance 50 - 53.

In an example, the impedance(s) 50 - 53 may be arranged between the stator and the controllable switch(es) 60 - 63 (see Figures 2A and 2C), i.e. the impedance(s) may have an end coupled to the stator. In some examples, the controllable switch(es) 60 - 63 may be arranged between the stator and the impedance(s) 50 - 53, i.e. the controllable switch(es) 60 - 63 may have an end coupled to the stator.

Figures 2A- 2E depict different examples of a short-circuit controlled switch 40A - 40E.

Figure 2A depicts a short-circuit controlled switch 40A comprising a controllable switch 60 and an impedance 50 arranged in series. The impedance 50 may be arranged between the stator and the controllable switch 60. Thus, the impedance may comprise an end connected to the stator and the other end connected to the controllable switch 60. The controllable switch 60 may therefore comprise an end connected to the impedance and the other end to the ground.

Figure 2B depicts a short-circuit controlled switch 40B comprising an impedance 50 and a controllable switch 60 arranged in series. The controllable switch 60 may be arranged between the stator and the impedance 50. Thus, the controllable switch 60 may comprise an end connected to the stator and the other end connected to the impedance 50. The impedance 50 may therefore comprise an end connected to the controllable switch 60 and the other end to the ground.

Figure 2C depicts a short-circuit controlled switch 40C comprising a plurality of controllable switches 61 - 63 and a plurality of impedances 51 - 53. Namely, in Figure 2C, three controllable switches 61 - 63 and three impedances 51 - 53 are used. The short-circuit controlled switch 40C may comprise a plurality of parallel branches wherein each branch may comprise a controllable switch 61 - 63 and an impedance 51 - 53 arranged in series. That is, the impedance 51 and controllable switch 61 may be arranged in series in the first branch. The impedance 52 and controllable switch 62 may be arranged in series in a second branch. The impedance 53 and controllable switch 63 may be arranged in series in a third branch. The first, second and third branches may be arranged in parallel.

The impedance 51 - 53 of each branch may comprise an end coupled to the stator and the other end coupled to the controllable switch 61 - 63 of the same circuit branch. Besides, the controllable switches 61 - 63 may have an end coupled to the ground.

Although in the example of Figure 2C three controllable switches, three impedances and three branches are shown, any other number of branches, controllable switches and/or impedances may be used.

By having a plurality of controllable switches, high power capacities may be obtained without further manufacturing cost increase as standard components may be used.

Figure 2D depicts a short-circuit controlled switch 40D comprising a plurality of controllable switches 61 - 63 and an impedance 50. In the example, three controllable switches are used. The controllable switches 61 - 63 may be arranged in parallel therebetween, and the impedance 50 may be arranged in series with all the controllable switches 61 - 63.

The controllable switches 61 - 63 may be arranged between the impedance 50 and the stator 11 and thus, each controllable switch 61 - 63 may comprise an end connected to the stator 11 and the other end connected to the impedance 50.

Although three controllable switches are shown in Figure 2D, any other number of controllable switches may be used. Figure 2E shows a short-circuit controlled switch 40E comprising a plurality of impedances 51 - 53 and a controllable switch 60. The plurality of impedances 51 - 53 may be arranged in parallel therebetween, and the controllable switch 60 may be connected in series with the plurality of impedances 51 - 53. Although Figure 2E shows three impedances, any other number of impedances may be used.

By using a plurality of switches and/or impedances the manufacturing costs may be reduced as commercially available or standard components may be used i.e. instead of manufacturing elements of a specific value.

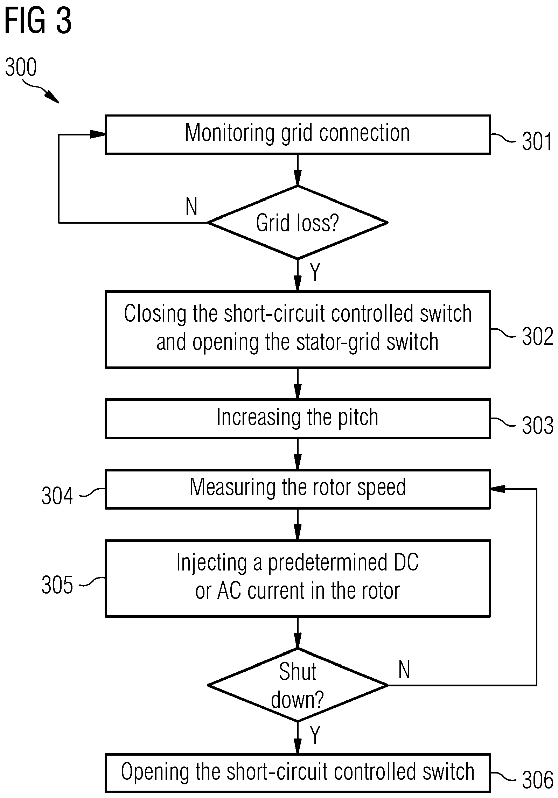

Figure 3 shows a flow chart of a method 300 for shutting down a DFIG wind power facility 1 in case of a grid fault, e.g. a grid loss, in a controlled manner. The method 300 may be implemented by a DFIG wind power facility 1 according to any of the disclosed examples.

Firstly, the grid connection may, in block 301, be monitored. Such monitoring may be carried out at the common coupling point by e.g. converter grid voltage controller or any other suitable device. In the event of a grid loss is detected, the stator-grid switch may be opened thereby decoupling the stator from the grid and the short-circuit controlled switch may, in block 302, be closed. Then, the pitch of the plurality of blades may, in block 303, be increased e.g. up to a shutdown position, for instance to about 90 degrees. Therefore, the wind power facility may decrease the rotation speed of the blades, i.e. of the rotor, progressively.

The rotor speed may, in block 304, be measured. A predetermined DC or AC current may, in block 305, be injected into the rotor thereby adapting the rotor frequency. The predetermined current may depend on e.g. the generator speed, number of poles of the generator and/or generator rated frequency. In an example, almost a pure DC current may be injected. In another example, the predetermined current may be a combination of DC and AC currents within the operation rotor current limits.

The rotor speed may then be measured and, upon measuring a rotational rotor speed below a predetermined shutdown speed e.g. about 50 - 100 rpm for a generator having a synchronous speed about 1500 rpm. Then, the short-circuit controlled switch may, in block 306, be opened e.g. at a current close to zero.

The method allows a secure shutdown of the wind power facility while also reducing the mechanical loads. Lifetime of the wind power facility may thus be extended and the maintenance tasks reduced.

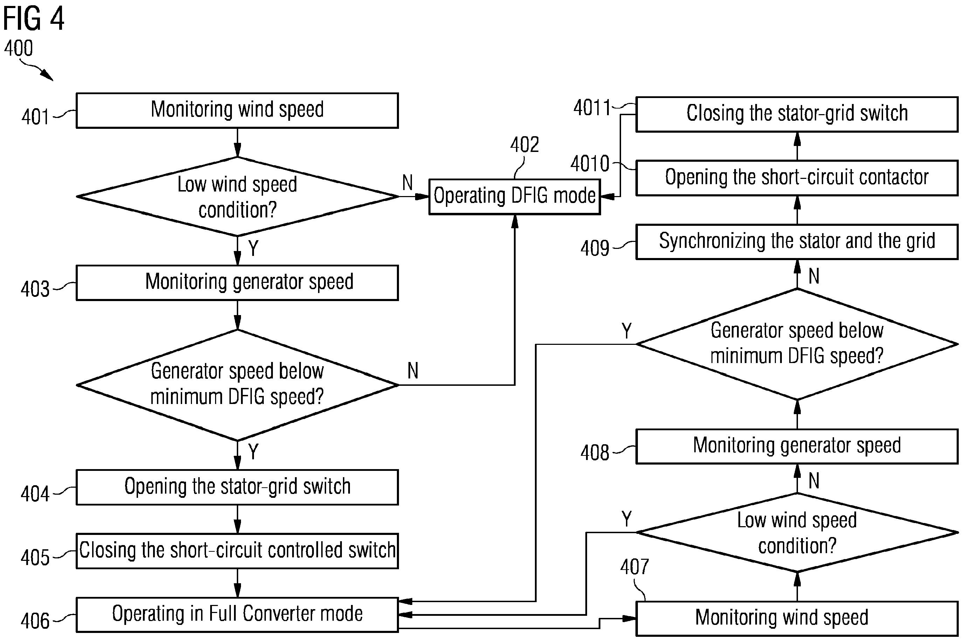

Figure 4 depicts a flow chart of a method 400 for operating a DFIG wind power facility 1 according to any of the disclosed examples under low wind speed condition.

During the operation of the wind power facility, the wind speed may, in block 401 be monitored e.g. by a sensor, an anemometer or by any other suitable device, in order to detect a low wind speed condition e.g. a wind speed below 3 - 5 m/s. In case a low wind speed condition is not detected the wind power facility may, in block 402, operate under (normal) DFIG operation mode, i.e. having a double current/power injection to the grid.

Otherwise, the speed of the DFIG generator may, in block 403, be monitored. If the generator speed is above or equal to a minimum DFIG speed, e.g. 1000 rpm for a generator of 1500 rpm of synchronous speed, the wind power facility may, in block 402, operate under normal DFIG operation mode.

Upon detection of a generator speed below a minimum DFIG speed, the stator-grid switch may, in block 404, be opened and the short-circuit controlled switch may, in block 405, be closed. Thus, the stator may be short circuited as the stator current may flow through the stator to the short-circuit controlled switch. Therefore, only the rotor current passing through the converter may reach the grid.

The DFIG wind power facility may, in block 406, operate in Full Converter (FC) mode, i.e. the DFIG wind power facility may comprise a single grid power injection thereby behaving as a FC wind power facility.

The DFIG wind power facility may thus be more efficient during low wind speeds.

The wind speed may, in block 407, be monitored to check whether the low wind speed condition remains. In case a low wind speed condition is measured, the DFIG wind power facility may continue, in block 406, operating in FC mode.

Otherwise, in case the low wind speed condition is no longer detected, the generator speed may, in block 408, be monitored again. In the event the generator speed is below the minimum DFIG speed, the DFIG wind power facility may continue, in block 406, operating in FC mode. On the contrary, i.e. in case the generator speed is above a minimum DFIG speed, the stator frequency and voltage may be synchronized with the grid frequency and voltage, respectively.

The short-circuit contactor may, in block 4010, be opened and the stator-grid switch may, in block 4011, be closed. The stator of DFIG wind power facility may thus be coupled to the grid. Therefore, DFIG wind power facility may, in block 402, operate in (normal) DFIG mode i.e. providing the grid a double power injection from the rotor via the converter and also from the stator.

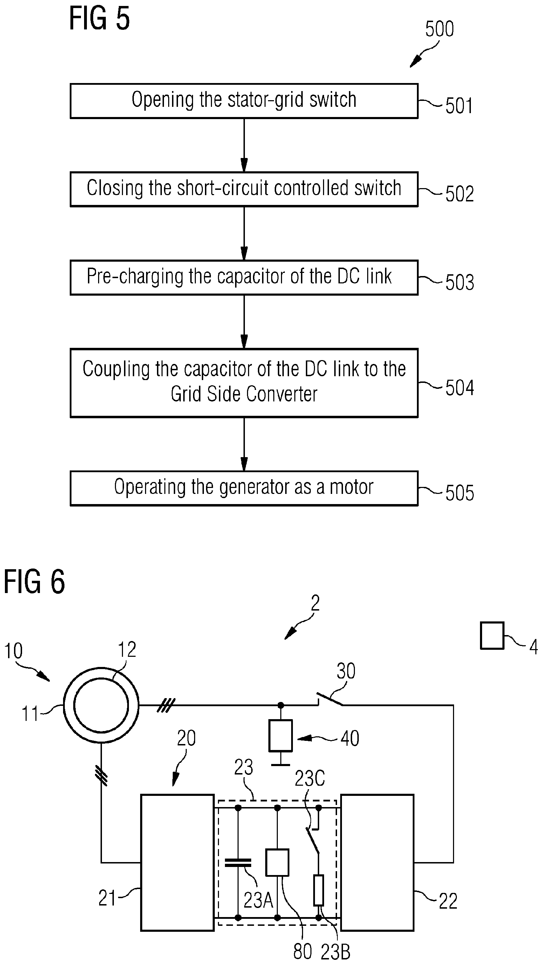

Figure 5 depicts a flow chart of a method 500 to operate a wind power facility 1 according to any of the disclosed examples as a motor, for example for enabling maintenance tasks.

Firstly, the stator-grid switch may, in block 501, be opened thereby decoupling the stator from the grid. Then, the short-circuit controlled switch may, in block 502, be closed and thus, the stator may be short-circuited.

The capacitor of the DC link may, in block 503, be previously pre-charged during the operation of the wind power facility. Once the capacitor is charged e.g. around 900 V, it may, in block 504, be coupled to the Grid Side Converter (GSC). The generator of the DFIG wind power facility may, in block 505, operate as motor with MSC and the stator as squirrel cage as the stator is short-circuited by the short-circuit controlled switch. That is, the generator may be operated as motor and the Machine Side Converter may supply the energy, i.e. similarly to a motor drive.

By being able to operate the DFIG as a motor may enable performing maintenance tasks on demand i.e. at required the moment or schedule, independently from external conditions such as wind conditions. Therefore, maintenance tasks may be carried out without delay and in a safe manner as the rotor lock position may be easily and quickly achieved.

Figures 6 shows a DFIG wind power facility 2. The DFIG wind power facility 2 may be configured to operate during grid faults such as grid loss, voltage dip, voltage drop, Low Voltage Ride Through (LVRT), etc.

The DFIG wind power facility 2 may comprise all the features of the DFIG wind power facility 1 according to any of the disclosed examples, i.e. a DFIG generator 10 comprising a rotor 12 and a stator 11, a converter 20 comprising a Machine Side Converter 21, a Grid Side Converter 22 and a DC link 23, a control system 4, a stator-grid switch 30 and a short-circuit controlled switch 40.

The DFIG wind power facility 2 may further comprise an Energy Storage System (ESS) 80 in the DC link 23. Such ESS 80 may be coupled either directly to the DC link.

Figure 6 depicts a wind power facility 2 comprising an ESS 80 directly coupled to the DC link. In an example, the ESS 80 may be arranged in parallel to the DC link capacitor 23A. In use, the addition of an ESS may provide further operative capabilities to the wind power facility 2 such as being able to operate as motor in grid loss condition.

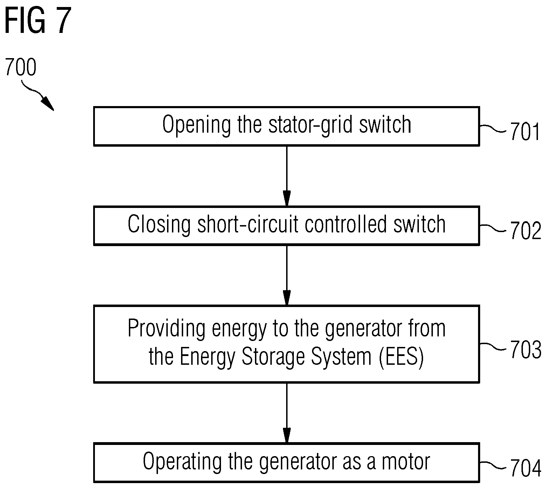

Figure 7 depicts a flow chart of a method 700 to operate a DFIG wind power facility 2 according to any of the disclosed examples as a motor. The method 700 may be implemented during a grid loss and/or after detecting a grid loss.

Firstly, the stator-grid switch may, in block 701, be opened thereby decoupling the stator from the grid. Then, the short-circuit controlled switch may, in block 702, be closed and thus, the stator may be short-circuited thereby enabling the current flow through the stator.

Energy from the Energy Storage System (EES) may then, in block 703, be provided to the generator in order to energize it and enabling it to function as motor. The ESS may be pre-charged or may be charged prior to a grid loss e.g. during the normal operation of the wind power facility.

The DFIG wind power facility may, in block 704, operate the generator as motor wherein the Machine Side Converter supply the energy i.e. similarly to a motor drive.

By being able to implement method 700, the wind power facility may, in absence of grid or in grid loss condition, enable maintenance tasks or may aid the wind power facility erection operation as the generator may function as motor independently from external influences such as wind condition or presence of grid.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### CLAUSES

For reasons of completeness, various aspects of the invention are set out in the following clauses:
Clause 1. A method for operating a DFIG wind power facility during low wind speed, the wind turbine facility comprising:
   a Doubly-Fed Induction Generator (DFIG) comprising a rotor and a stator, wherein the stator comprises at least one three-phase winding;
   a control system configured to manage the operation of the DFIG wind power facility;
   an electric converter comprising a Machine Side Converter (MSC), a Grid Side Converter (GSC) and a DC link connected therebetween;
   a stator-grid switch for selectively coupling/decoupling the stator and the grid; and
   wherein the DFIG wind power facility further comprises a short-circuit controlled switch configured to selectively short-circuit the stator thereby allowing the current to flow through the stator upon decoupling the grid from the stator, and wherein the short-circuit controlled switch further comprises at least an impedance and at least one controllable switch, and
   wherein the method comprises:
   measuring wind speed;
   monitoring generator speed upon detection of a low wind speed condition;
   opening the stator-grid switch in the event the generator speed is below a predefined minimum generator speed value; and
   closing short-circuit controlled switch thereby enabling the DFIG the current through the stator to flow to ground; operating in Full Converter mode enabling single power injection to the grid from rotor.
Clause 2. The method according to clause 1, further comprising:
   monitoring wind speed during full converter mode;
   monitoring generator speed upon detection of a low wind speed condition;
   synchronizing the stator frequency and voltage with the grid frequency and voltage in case the generator speed is above a predefined minimum generator speed value;
   opening the short-circuit controlled switch;
      closing the stator-grid switch; and
   operating in DFIG mode enabling double power injection from rotor and stator, to the grid.
Clause 3. A method for operating a DFIG wind power facility as a motor, the wind power facility comprising the wind turbine facility comprising:
   a Doubly-Fed Induction Generator (DFIG) comprising a rotor and a stator, wherein the stator comprises at least one three-phase winding;
   a control system configured to manage the operation of the DFIG wind power facility;
   an electric converter comprising a Machine Side Converter (MSC), a Grid Side Converter (GSC) and a DC link connected therebetween;
   a stator-grid switch for selectively coupling/decoupling the stator and the grid; and
   wherein the DFIG wind power facility further comprises a short-circuit controlled switch configured to selectively short-circuit the stator thereby allowing the current to flow through the stator upon decoupling the grid from the stator, and wherein the short-circuit controlled switch further comprises at least an impedance and at least one controllable switch,
      and
   wherein the method comprises:
   opening the stator- grid switch thereby decoupling the stator from the grid;
   closing the short-circuit controlled switch thereby short-circuiting the stator;
   pre-charging the capacitor of the DC link;
      coupling the capacitor of the DC link to the Grid Side Converter (GSC); and
   operating DFIG generator as motor.
Clause 4. A method for operating a DFIG wind power facility as a motor, the wind power facility comprising:
   a Doubly-Fed Induction Generator (DFIG) comprising a rotor and a stator, wherein the stator a Doubly-Fed Induction Generator (DFIG) comprising a rotor and a stator, wherein the stator comprises at least one three-phase winding;
   a control system configured to manage the operation of the DFIG wind power facility;
   an electric converter comprising a Machine Side Converter (MSC), a Grid Side Converter (GSC) and a DC link connected therebetween;
   a stator-grid switch for selectively coupling/decoupling the stator and the grid;
   a short-circuit controlled switch configured to selectively short-circuit the stator thereby allowing the current to flow through the stator upon decoupling the grid from the stator, and wherein the short-circuit controlled switch further comprises at least an impedance and at least one controllable switch; and
   an Energy Storage System (ESS) in the DC link;
   wherein the method comprises:
   opening the stator-grid switch thereby decoupling the stator from the grid;
   closing the short-circuit controlled switch thereby short-circuiting the stator and enabling the current to flow through the stator;
   providing energy to the generator from the EES; and operating the generator as motor.

## Claims

1. A DFIG wind power facility configured to operate during grid faults, the DFIG wind power facility comprising:
a Doubly-Fed Induction Generator (DFIG) comprising a rotor and a stator, wherein the stator comprises at least one three-phase winding;
a control system configured to manage the operation of the DFIG wind power facility;
an electric converter comprising a Machine Side Converter (MSC), a Grid Side Converter (GSC) and a DC link connected therebetween;
a stator-grid switch for selectively coupling/decoupling the stator and the grid; and
a short-circuit controlled switch configured to selectively short-circuit the stator thereby allowing the current to flow through the stator upon decoupling the grid from the stator, and wherein the short-circuit controlled switch further comprises at least an impedance and at least one controllable switch.

2. The DFIG wind power facility according to claim 1, wherein the at least one controllable switch is an electromechanical switch or an electronic switch.

3. The DFIG wind power facility according to claim 1 or 2, wherein the short-circuit controlled switch comprises a plurality of controllable switches.

4. The DFIG wind power facility according to claim 3, wherein the short-circuit controlled switch comprises a plurality of impedances.

5. The DFIG wind power facility according to claim 4, wherein the number of short-circuit controlled switch(es) is be proportional to the number of phases.

6. The DFIG wind power facility according to any of claims 1 - 5, further comprising an Energy Storage System (ESS) in the DC link.

7. The DFIG wind power facility according to claim 6, wherein the ESS comprises a plurality of batteries in series and/or in parallel.

8. The DFIG wind power facility according to claim 6 or 7, wherein the ESS is connected parallel to the DC link capacitor.

9. The DFIG wind power facility according to any of claims 1 - 8, being a wind turbine.

10. A method for operating a DFIG wind power facility according to any of claims 1 - 9 during grid faults, wherein the DFIG wind power facility further comprises a plurality of blades, the method comprising:
monitoring the grid connection,
closing the short-circuit controlled switch and opening the stator-grid switch upon detecting a grid loss;
increasing the pitch of the plurality of blades of wind power facility for gradually reducing the rotational speed of the rotor;
measuring the rotational speed of the rotor;
injecting a predetermined DC or AC current in the rotor for adapting the rotor frequency; and
opening the short-circuit controlled switch upon measuring a rotational speed of the rotor below a predetermined shutdown speed thereby allowing a controlled shut down of the wind power facility.
